# NEW EUROPEAN PATENT SPECIFICATION

(11) **EP 0 295 727 B2**
(45) Date of publication and mention of the opposition decision: **27.01.1999**
(45) Mention of the grant of the patent: 24.03.1993
(21) Application number: 88200932.7
(22) Date of filing: 09.05.1988
(51) Int. Cl.: C08F 210/02, C08F 218/08, C08F 218/10

(54) **Polymeric products of ethylene and vinyl esters**
Polymere von Ethylen und Vinyl-Estern
Polymères d'éthylène et d'esters vinyliques

(30) Priority: 21.05.1987 GB 8711984
(43) Date of publication of application: 21.12.1988
(73) Proprietor: SHELL INTERNATIONALE RESEARCH MAATSCHAPPIJ B.V., 2596 HR Den Haag (NL)
(72) Inventor: Scholten, Henricus Paulus Hubertus, B-1000, Brussels (BE); Aten, Willem Cornelis, B-1000, Brussels (BE); Sonderman, Marc Stephen, B-1000, Brussels (BE); Vermeulen, Jan, B-1000, Brussels (BE)

(56) References cited:
- GB-A- 1 086 036
- GB-A- 1 569 637
- US-A- 3 562 229
- Technical Information Shell Chemical Society, New York "VV9 Vinyl Monomer", October 1966
- Technical Information Shell B.V. "VEOVA 9", 1979 and "VEOVA 10", 1984

## Description

This invention relates to latices containing ethylene/vinyl ester interpolymers, to the preparation of such latices, and to coating compositions comprising such latices. More specifically, the interpolymers are of ethylene, vinyl acetate and the vinyl ester of a tertiary carboxylic acid.

Latices containing interpolymers of ethylene, vinyl acetate and vinyl chloride are established products commonly used in emulsion paints. However, there are certain disadvantages associated with such latices. Their preparation requires a high ethylene pressure and requires the handling of the toxic monomer vinyl chloride. Moreover, coatings formed from such latices tend to degrade on exposure to heat and/or ultra violet light.

Latices containing interpolymers of ethylene and vinyl acetate are also used, but also have disadvantages, the most serious being their poor water and alkali resistance.

US 3562229 discloses interpolymers of ethylene and vinyl esters of branched chain monocarboxylic acids, optionally with a ternary ingredient, for example vinyl acetate. One example is of an interpolymer containing 30% by weight of vinyl acetate, 40% by weight of ethylene and 30% by weight of the vinyl ester of "Versatic" 911 acid (trade mark for a saturated tertiary monocarboxylic acid, in this instance comprising a mixture of acids of 9, 10 and 11 carbon atoms). The interpolymer is prepared by emulsion polymerisation conditions in the presence of a colloidal Group VIII noble metal, followed by coagulation of the emulsion to a rubber-like material. There is no suggestion that the emulsion itself, or any like emulsion or class of such emulsions, has useful properties.

UK 1086036 discloses in broad terms interpolymers of ethylene, one or more vinyl esters of branched carboxylic acid, for example of acids with 5-20 carbon atoms and one or more readily hydrolysable vinyl esters of carboxylic acids, for example of acids with 2-4 carbon atoms. Whilst the preparation of latices of such materials is mentioned as a possibility, none of the examples demonstrate the preparation of latices and there is no suggestion of the advantageous utility of the particular class of latices with which the present invention is concerned.

The vinyl ester of a tertiary carboxylic acid having 10 carbon atoms in the acid moiety (available under the trade mark "VeoVa" 10) has a good reputation with respect to ease of handling and is readily co-polymerised with vinyl acetate to form latices useful in a variety of applications, in particular being widely used in paints. Paints containing such latices have good resistance to heat, ultra violet light and alkaline environments. In an attempt to develop a latex in which the polymeric component incorporates the cheap product ethylene, but which does not have the above-mentioned disadvantages of latices in which the polymeric component is vinyl acetate/ethylene or vinyl chloride/ethylene/vinyl acetate, latices containing an interpolymer of ethylene, vinyl acetate and "VeoVa" 10 were prepared. Such latices are in accordance with JP-7203705 which suggests coating compositions containing an interpolymer of vinyl acetate, ethylene and the vinyl esters of branched carboxylic acids such as vinyl neodecanoate, vinyl 2,2-dimethylvalerate, vinyl neotridecanoate, vinyl trimethylacetate, vinyl stearate and vinyl n-valerianate and in particular from vinyl neodecanoate.

However, it has been found that the polymer films formed from latices comprising interpolymers derived from vinyl esters of a tertiary aliphatic carboxylic acid, containing 10 carbon atoms were too tacky to be useful for coating applications and showed a tendency to degrade in the presence of alkaline solutions.

It has now been found, surprisingly, that polymer films formed from certain interpolymer latices of ethylene, vinyl acetate and the vinyl ester of a tertiary aliphatic carboxylic acid containing 9 carbon atoms in the acid moiety do not suffer from the above-mentioned disadvantages of the corresponding products containing 10 carbon atoms. It is believed that these surprising and advantageous properties are found in a certain class of such latices, characterised in terms of defined proportions of the constituent materials of the interpolymer and by the selection of a vinyl ester of a tertiary aliphatic carboxylic acid containing 9 carbon atoms, the glass transition temperature of whose self-polymer, as measured by differential scanning calorimetry, is in the range 20-120 °C, preferably 40-100 °C, most preferably 50-70 °C.

Accordingly the present invention provides a latex comprising 25-65% by weight of the latex of an interpolymer obtainable by polymerization of:
(I) from 97 to 99.9 %wt of (a) vinyl acetate, (b) ethylene and (c) the vinyl ester of a tertiary aliphatic carboxylic acid in which the acid moiety contains 9 carbon atoms, the glass transition temperature of the self-polymer of component (c), as measured by differential scanning calorimetry, being in the range 20-120 °C, wherein the weight ratios of the constituents of the interpolymer are defined by the ranges:
   100 parts (a): 5-50 parts (b);
   100 parts (a) : 5-120 parts (c);
   and 100 parts (b) : 50-500 parts (c), with
(II) from 0.1 to 3 %wt of further copolymerizable stabilizers.

Preferably the weight ratios of the constituents of the interpolymer are defined by the ranges:
100 parts (a): 10-40 parts (b);
100 parts (a): 10-100 parts (c);
and 100 parts (b) : 80-400 parts (c).

The component (c) may be represented by the general formula 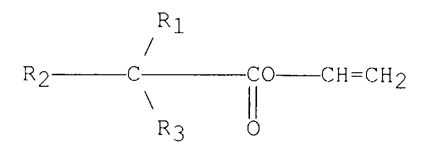 where each group R is an alkyl group and the groups R contain 7 carbon atoms in total.

The component (c) may be a single chemical compound but more commonly, as a consequence of the preparation of such products, will be a mixture of isomers which vary in the branching in the aliphatic moiety. As a further consequence of the preparation a minor amount of impurities may be present, for example homologues. Therefore, the definition "the vinyl ester of a tertiary aliphatic carboxylic acid in which the acid moiety contains 9 carbon atoms, the glass transition temperature of whose self-polymer, as measured by differential scanning calorimetry, is in the range 20-120 °C" included within its compass products containing a major quantity, suitably 90% or more, of a compound or of a mixture of isomers in which said acid moiety contains 9 carbon atoms, and a minor quantity, for example up to about 10%, of further compounds. The above definitions of amounts of (c) which may be used refer to the component (c) with any such isomers and impurities. The above definitions of the glass transition temperature of the salt-polymer of (c) relate to the component (c) with any such isomers and further compounds co-polymerised.

A preferred component (c) is sold under the trade mark "VeoVa"9. The glass transition temperature of self-polymerised "VeoVa" 9, as measured by differential scanning calorimetry, is generally about 60 °C.

As is well known in the art, reliable and reproducible assessment of a polymer's glass transition temperature is achieved when the polymer is pure, and when it is of sufficiently high molecular weight for the glass transition temperature to be substantially independent thereof. As is well known, drying can be employed to remove water, as well as unreacted monomers if they are sufficiently volatile, whilst a suitable volatile inert solvent can be employed to remove monomers which cannot be removed by evaporation, solvent subsequently being removed from the polymer by drying.

Preferably, the interpolymer comprises 40-60% of the weight of the latex.

The constituents (a), (b) and (c) are the basic constituents of the interpolymers of the present invention but similar products may be prepared which contain small amounts, preferably no more than 3% by weight of the interpolymer, of further copolymerised constituent(s). Such products fall within the scope of this invention. Preferably, however, the interpolymers of the present invention are composed substantially entirely of the components (a), (b) and (c), or else may also contain 0.1-3% by weight of interpolymer of co-polymerised stabilisers, such as acrylamide or acrylic acid.

Latices in accordance with the invention are of particular interest as binders for lacquers, paints and varnishes due to their good film forming properties, their high pigment binding power, the lack of tackiness of the films, their alkali resistance and resistance to ultra violet light. Paints containing the latices of the invention normally contain co-solvents and pigments, and will commonly contain further constituents, examples being fillers, thickeners, dispersants, preservatives, corrosion inhibitors, and anti-foaming agents.

A further aspect of the invention is provided by a powder product formed by drying a latex of the invention, as defined above. Such a powder could be reconstituted into a latex as required, or incorporated into a product such as a mortar.

The latices of the invention and/or powder products formed therefrom may also find application in the field of paper and textile coatings, adhesives, polished, sealants and putties.

A latex as defined above in accordance with the invention is prepared by emulsion polymerisation, wherein an aqueous emulsion comprising vinyl acetate, the vinyl ester of a tertiary aliphatic carboxylic acid in which the acid moiety contains 9 carbon atoms, as defined above, one or more stabilisers, one of more buffering agents and one or more polymerisation initiators, is reacted at an elevated temperature, suitably 40-100 °C, with ethylene.

The reaction is preferably effected using ethylene at elevated pressure, suitably 10-70 bar (approximately 10x10⁵-70x10⁵ Pa).

It has been found that the presence of said vinyl ester of a tertiary aliphatic carboxylic acid having 9 carbon atoms in the acid moiety, unexpectedly and advantageously facilitates the incorporation of ethylene into the interpolymer; thus the higher the proportion of said vinyl ester relative to vinyl acetate, the higher the proportion of copolymerised ethylene at a given ethylene pressure.

The preparation of a latex as defined above by emulsion polymerisation constitutes a further aspect of the invention.

Stabilisers suitably constitute about 1-4% by weight of the latex. It is preferred that the stabilisers used in the latex comprise at least one anionic surface active agent, which is believed to have a beneficial effect on the stability of the latex and in particular on the reaction mixture during the polymerisation process, facilitating the formation of micelles of the interpolymer, and at least one non-ionic surface active agent, which is believed to contribute to latex stability; or at least one surface active agent of the mixed anionic/non ionic type; and at least one further stabiliser, of the colloidal type or of the copolymerised type, for example acrylamide or, especially, acrylic acid.

Suitable anionic surface active agents include alkylaryl sulphonates, for example alkylbenzene sulphonates; salts of sulphosuccinic esters; alkyl sulphates, alkyl sulphonates, sulphates of hydroxyethyl esters of monocarboxylic acids, sulphates of alkylphenoxypolyethoxyethanols, sulphates and sulphonates of hydroxypropyl esters of monocarboxylic acids and sulphates of monoglycerides of monocarboxylic acids, such compounds having 12-24 carbon atoms; and salts of C₉₋₁₉ monocarboxylic acids. Suitably 0.05-1% by weight of the latex may be constituted by anionic surface active agents, preferably 0.1-0.5%.

Suitable non ionic surface active agents include reaction products of hydroxy compounds with alkylene oxides, such as ethylene oxide or propylene oxide, for example a compound of the general formula R-C₆H₄-O-(CH₂-CH₂-O)ₙ-H where R represents a C₆₋₁₆, especially C₈₋₉, alkyl group and n represents a number from 3 to 40; reaction products of ethylene oxide with propylene glycol ethers, or with monocarboxylic acids, suitably of 6-20 carbon atoms, for example lauric acid, palmitic acid or stearic acid, or with alcohols, suitably of 6-20 carbon atoms, for example octyl, lauryl or cetyl alcohol. Suitably 0.5-2% of the weight of the latex may be constituted by non ionic surface active agents.

Suitable surface active agents of the mixed anionic/non ionic type include sulphonates based on alkylaryl polyglycol ethers.

Preferably an anionic and a non-ionic surface active agent are used. Especially preferred is the use of an alkylaryl sulphonate together with a compound R-C₆H₄-O- (CH₂-CH₂-O)ₙ-H.

Suitable colloidal stabilisers include cellulose compounds, for example methyl cellulose, carboxymethyl cellulose and, especially, hydroxyethyl cellulose; natural products such as starches, gelatine, casein, gum arabic and alginates; biopolymers; and polyvinyl alcohol of both fully and partially hydrolysed grades and polyvinyl pyrrolidone. Suitably 0.02-2% of the weight of the latex may be constituted by colloidal stabilisers. It has been found, however, that good dispersion in the latex as well as particularly good properties in the eventual polymer films are in particular achieved when the dispersing agents are of the non-colloidal, copolymerised type, for example acrylic acid. These effects can be achieved with low quantities of such compounds, suitably 0.1-1.5% based on weight of the latex. Since these compounds are copolymerised the eventual interpolymer may comprise about 0.2-3% by weight of this component.

Suitable as initiators are compounds which form free radicals under the reaction conditions for the emulsion polymerisation, whether by thermal breakdown, redox reaction or photo initiation. Initiators include peroxides, hydroperoxides, persulphates, peroxy diphosphates or diazo compounds. Examples are benzoyl peroxide, ditertiary butyl peroxide, hydrogen peroxide, alpha,alpha'-azo-iso-butyric nitrile and sodium, ammonium or, especially, potassium persulphate. 0.1-1%, preferably 0.2-0.5% of initiator, based on weight of the reaction mixture, is suitably employed. Compounds which cause redox decomposition of above-named 'per' initiators include salts of reducing acids of sulphur, suitably alkali metal sulphites, (for example Na₂SO₃), alkali metal bisulphites, for example NaHSO₃), alkali metal metabisulphites, (for example Na₂S₂O₅), alkali metal thiosulphates, (for example Na₂S₂O₃) alkali metal formaldehyde sulphoxylates, (for example Na[HSO₂.CH₂O]) and, the preferred class, alkali metal dithionites (for example Na₂S₂O₄). Such compounds, when used, may constitute 0.1-0.5% of the weight of the reaction mixture.

The polymerisation is suitably effected at 70-100°C when thermal initiation is used; and at 40-70°C when redox initiation is used. When redox initiation is used the reaction is carried out in an inert atmosphere, nitrogen suitably being used to flush out the reaction vessel prior to commencement of the reaction and air being excluded from the vessel during the reaction.

Buffering agents suitable for use in the polymerisation process are water-soluble compounds which can prevent the pH of the mixture falling below about 4. Preferred buffering agents include borax and an organic acid, suitably acetic acid or acrylic acid, or an alkali metal carbonate or bicarbonate or acetate. If acrylic acid is employed in the buffer it will be copolymerised, conferring stability on the latex, and the pH may need to be increased once polymerisation is complete.

The invention will now be further described with reference to the following examples.

### Example of latex preparation - thermal initiation

A latex according to the invention was prepared in a 2-litre autoclave reactor equipped with a stirrer, thermometer, inlet tubes for initiator, monomers, nitrogen (not used with thermal initiation) and ethylene.

The reactor was charged with 7.0 parts by weight (p/w) of an 10 wt% aqueous solution of an alkylaryl sulphonate anionic surfactant sold under the trade mark "Humifen" SF 90, (containing 90% active material) 0.1 p/w potassium persulphate and 0.05 p/w borax in 33.0 p/w demineralised water.

An monomer pre-emulsion was prepared by emulsifying 80 p/w vinyl acetate, 20 p/w "VeoVa" 9, 0.5 p/w acrylic acid (stabiliser) with a solution of 4.8 p/w of a 10 wt% aqueous solution of "Humifen" SF 90, 2.0 p/w of a 1/1 mixture of the non-ionic surfactants "Ethylan" HA and "Ethylan" 44 (trade mark; nonylphenol ethoxylates with 35 and 4 ethylene oxide units respectively), 0.4 p/w potassium persulphate and 0.45 p/w borax in 45.2 p/w of demineralised water.

The initial reactor charge was heated to 80°C. The monomer pre-emulsion was added to the reactor over a period of 3 hours. Ethylene was supplied to the reactor at a pressure of 20 bars until the pre-emulsion addition was complete. After the addition was complete the temperature was maintained at 80°C for a further 2 hours.

The latex was then transferred under the residual pressure to a separate reactor in which it was allowed to cool to ambient temperature. A small stream of ethylene was allowed to escape from the reactor, to reduce any risk of foaming.

Finally the latex was filtered and the pH (measured with a pH meter) raised to 7.0-7.5 by addition of an appropriate amount of 10 wt% aqueous ammonium carbonate solution.

Approximately 1 litre of latex was thus prepared.

A series of further latices was prepared by a method as described above, involving stabilisation by acrylic acid and thermal initiation. Ethylene pressures and vinyl acetate/"VeoVa" 9 ratios were varied. Some of the reactions employed different anionic and non ionic surface active agents. Some of the reactions were carried out at 90°C and in some cases a few drops of 25% aqueous ammonia were added after the ammonium carbonate addition to bring the pH into the range 7.0-7.5.

The interpolymers were analysed in one or more of the following ways.

The glass transition temperature (Tg) was measured by differential scanning calorimetry.

Ethylene content was determined by an interpolation method following measurement of the glass transition temperature (Tg) of the interpolymer, based on knowledge of the Tg's of its self-polymerised constituents; or by a method involving severe (total) hydrolysis of latices of known interpolymer content using aqueous potassium hydroxide in 1/1 v/v ethanol/toluene (0.5mol/litre) followed by titration of the remaining base against hydrochloric acid (0.5 mol/litre in ethanol), the ester group concentration of the interpolymer being calculable from the thus-derived information of the quantity of base used in the hydrolysis.

The minimum film forming temperatue (MFT) was recorded.

The monomer conversion was determined by a bromination and titration technique giving information on the free vinyl ester concentration. A sample of a latex was reacted at 0-5°C with an excess of bromine in glacial acetic acid followed by determination of the excesss bromine iodometrically with sodium thiosulphate.

The solids content was determined by drying the latex and comparing the initial with the final weight.

Whitening resistance was measured on a film formed from the latex. The film was applied to a glass panel with a 200 micron applicator. The film was allowed to dry for one week at about 40°C. A drop of demineralised water was placed on the film and the whitening of the film assessed after 5, 10, 15 and 60 minutes, each time on a 0-10 scale, 10 indicating no effect and 0 indicating complete whitening, the ratings being summated.

Viscosity was measured on a Brookfield viscometer, spindle 3, 60 rpm, 23°C.

The alkali resistance was assessed by immersing a film formed by drying the latex, in a 2 wt% solution of sodium hydroxide, for two weeks, then drying the film completely, then measuring the weight loss.

The results are presented in Table 1 below.

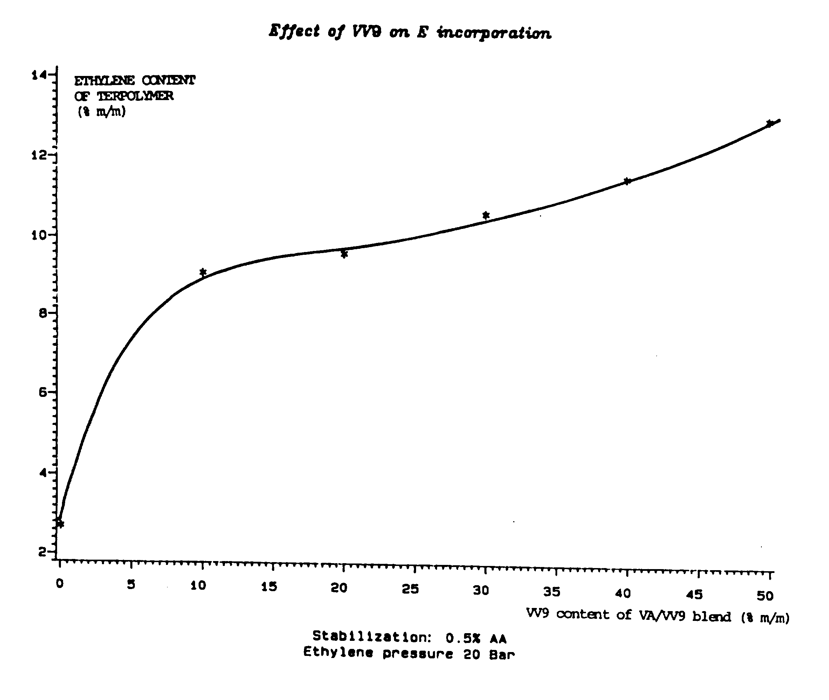

Figure 1 of the drawings is a graph derived from the results, presented in Table 1, of experiments carried out at 20 bars, showing how the ethylene content of the interpolymer varies as a function of the proportion of "VeoVa" 9 present.

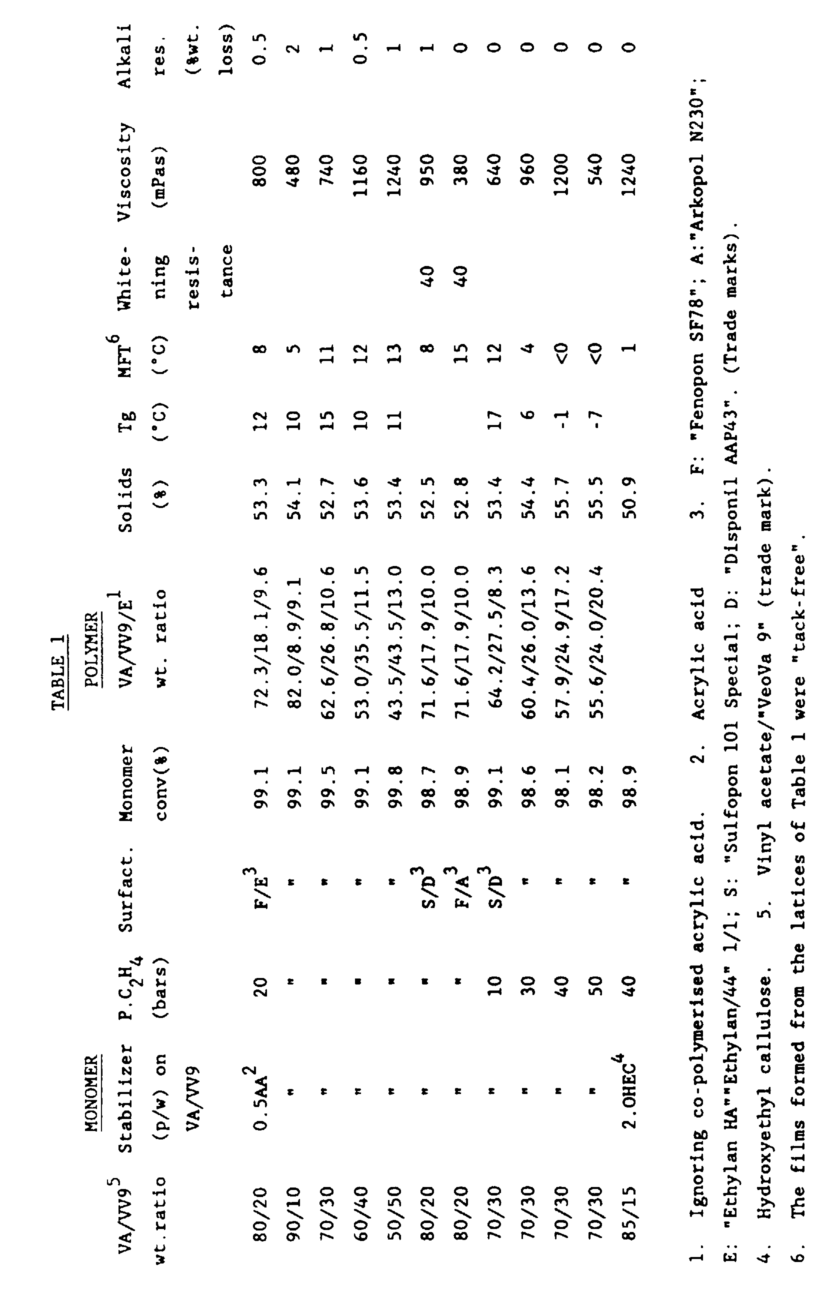

### Example of latex preparation - redox initiation

A further, redox initiated latex according to the invention was prepared in the apparatus described above.

The initial reactor charge was prepared by dissolving 0.6 parts by weight (p/w) of "Humifen" SF 90, 0.05 p/w sodium carbonate, 0.086 p/w potassium persulphate and 0.058 p/w sodium dithionite in 25.0 p/w demineralised water.

An initiator solution was prepared by dissolving 0.4 p/w "Humifen" SF 90, 0.29 p/w sodium dithionite, 0.43 p/w potassium persulphate and 0.25 p/w sodium bicarbonate in 60.0 demineralised water. Finally 10.0 p/w of a 25 wt% non-ionic surfactant "Arkopal" N230 was added.

A monomer mixture was prepared by mixing 80 p/w vinyl acetate with 20 p/w "VeoVa" 9. 0.5 p/w acrylic acid was included, for stabilisation.

The reactor was carefully flushed with nitrogen. The initial reactor charge was then introduced into the reactor and heated to 55°C. The initiator solution and monomer mixture were added continuously to the reactor in separate streams, over a period of 2.5 and 2 hours respectively. After the initiator addition was completed the temperature was maintained at 55°C for a further 1.5 hours. The latex was then allowed to cool and was then filtered. Throughout the period in which the reactor was heated an ethylene pressure of 20 bars was maintained.

The resulting latex was analysed with respect to monomer conversion, solids content, viscosity, MFT and alkali extraction as described above. The results are presented below, together with the results of a water absorption test in which the weight increase of a film formed from the latex is determined after 14 days immersion in water (a weight increase of less than 100% representing a very good performance and a weight increase of 100-200% representing a normal range for a good quality general purpose latex), and the results of a scrub test in which an indoor paint formulated with a pigment volume concentration of 80% was subjected to scrub treatment, the number of cycles until breakdown occurred being recorded, the testing being in accordance with DIN 53778 (50-100 cycles being adequate for a general purpose latex, and more than 500 cycles denoting a good performance).
Monomer conversion: 98.2%
Solids content: 51.6%
Viscosity: 70 mPas
MFT: 8°C
Alkali extraction: 0%
Scrub resistance: 750 cycles
Water absorbtion: 95%

Films formed from the latex were not tacky and so would have little tendency to pick up dirt and dust.

### Comparison Examples

Latices of vinyl acetate, "VeoVa" 10 and ethylene were prepared by thermal initiation in the manner described in the first experimental write-up above, for "VeoVa" 9. Table 2 below presents results for such latices.

Films formed from such latices were tacky and would be expected to pick up dirt and dust.

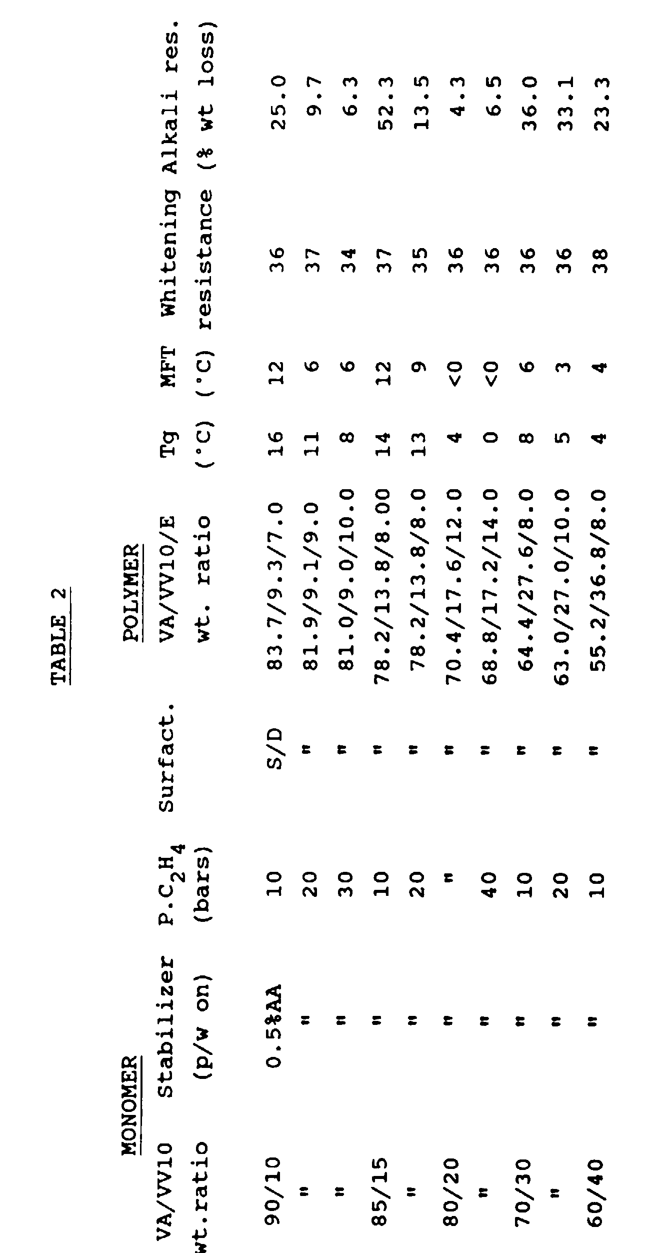

## Claims (Claims for the following Contracting State(s): DE, FR, GB, IT, NL)

1. A latex comprising 25-65% by weight of the latex of an interpolymer obtainable by polymerization of
(I) from 97 to 99.9 %wt of (a) vinyl acetate, (b) ethylene and (c) the vinyl ester of a tertiary aliphatic carboxylic acid in which the acid moiety contains 9 carbon atoms, the glass transition temperature of the self-polymer of component (c), as measured by differential scanning calorimetry, being in the range 20-120 °C, wherein the weight ratios of the constituents of the interpolymer are defined by the ranges:
100 parts (a): 5-50 parts (b);
100 parts (a): 5-120 parts (c);
and 100 parts (b): 50-500 parts (c), with
(II) from 0.1 to 3 %wt of further copolymerizable stabilizers.

2. A latex according to claim 1, wherein the weight ratios of the constituents of the interpolymer are defined by the ranges:
100 parts (a): 10-40 parts (b);
100 parts (a): 10-100 parts (c);
and 100 parts (b): 80-400 parts (c).

3. A process for the preparation of a latex as claimed in claim 1 or 2, wherein an aqueous dispersion comprising vinyl acetate, the vinyl ester of a tertiary aliphatic carboxylic acid in which the acid moiety contains 9 carbon atoms, one or more copolymerisable stabilisers, one or more buffering agents and one or more polymerisation initiators, is reacted with ethylene at elevated temperature.

4. A process according to claim 3, wherein the reaction temperature is in the range 40-100 °C and the reaction is carried out at an ethylene pressure in the range 10-70 bar.

5. A process according to claim 3 or 4, wherein the reaction mixture includes an alkylaryl sulphonate surfactant and a compound of the general formula R-C₆H₄-O-(CH₂-CH₂-O)ₙ-H, where R represents a C₆₋₁₆ alkyl group and n represents a number from 3 to 40.

6. A process according to any of claims 3, 4 or 5, wherein the reaction mixture includes 0.1-1.5% by weight of acrylic acid or acrylamide as copolymerisable stabiliser.

7. A process according to any of claims 3 to 6, wherein the reaction temperature is 40-70°C and the polymerisation is initiated on redox decomposition of a peroxide, hydroperoxide persulphate or peroxydiphosphate by a salt of a reducing acid of sulphur, the reaction being carried out with exclusion of air.

8. A paint or lacquer or varnish composition comprising a latex as claimed in claim 1 or 2, together with at least one additional constituent selected from co-solvents, pigments, thickeners, dispersants, preservatives, corrosion inhibitors and antifoaming agents.

9. A powder product formed by drying a latex as claimed in claim 1 or 2.

## Claims (Claims for the following Contracting State(s): ES)

1. A process for the preparation of a latex comprising 25-65% by weight of the latex of an interpolymer obtainable by polymerization of
(I) from 97 to 99.9 %wt of (a) vinyl acetate, (b) ethylene and (c) the vinyl ester of a tertiary aliphatic carboxylic acid in which the acid moiety contains 9 carbon atoms, the glass transition temperature of the self-polymer of component (c), as measured by differential scanning calorimetry, being in the range 20-120 °C, wherein the weight ratios of the constituents of the interpolymer are defined by the ranges:
100 parts (a): 5-50 parts (b);
100 parts (a): 5-120 parts (c); and
100 parts (b): 50-500 parts (c), with
(II) from 0.1 to 3 %wt of further copolymerizable stabilisers, wherein an aqueous dispersion comprising vinyl acetate, the vinyl ester of a tertiary aliphatic carboxylic acid in which the acid moiety contains 9 carbon atoms, one or more copolymerizable stabilizers, one or more buffering agents and one or more polymerization initiators, is reacted with ethylene at elevated temperature.

2. A process according to claim 1, wherein the reaction temperature is in the range 40-100 °C and the reaction is carried out at an ethylene pressure in the range 10-70 bar.

3. A process according to claim 1 or 2, wherein the reaction mixture includes an alkylaryl sulphonate surfactant and a compound of the general formula R-C₆H₄-O-R-C₆H₄-O-(CH₂-CH₂-O)ₙ-H, where R represents a C₆₋₁₆ alkyl group and n represents a number from 3 to 40.

4. A process according to any of claims 1, 2 or 3, wherein the reaction mixture includes 0.1-1.5% by weight of acrylic acid or acrylamide as copolymerizable stabiliser.

5. A process according to any of claims 1 to 4, wherein the reaction temperature is 40-70 °C and the polymerization is initiated on redox decomposition of a peroxide, hydroperoxide persulphate or peroxydiphosphate by a salt of a reducing acid of sulphur, the reaction being carried out with exclusion of air.

## Patentansprüche (Patentansprüche für folgende(n) Vertragsstaat(en): DE, FR, GB, IT, NL)

1. Ein Latex, der zu 25 bis 65 Gew.-% des Latex aus einem Interpolymer besteht, das erhältlich ist durch Polymerisation von
(I) 97 bis 99,9 Gew.-% an (a) Vinylacetat, (b) Ethylen und (c) dem Vinylester einer tertiären, aliphatischen Carbonsäure, worin der Säureteil 9 Kohlenstoffatome enthält, und worin die Glasübergangstemperatur des Eigenpolymerisats der Komponente (c), bestimmt mittels Differentialthermoanalyse, im Bereich von 20-120°C liegt, wobei die Gewichtsverhältnisse der Bestandteile des Interpolymers durch die folgenden Bereiche definiert sind:
100 Teile (a): 5-50 Teile (b);
100 Teile (a): 5-120 Teile (c); und
100 Teile (b): 50-500 Teile (c), mit
(II) 0,1 bis 3 Gew.-% weiterer copolymerisierbarer Stabilisatoren.

2. Latex nach Anspruch 1, in dem die Gewichtsverhältnisse der Bestandteile des Interpolymers durch die folgenden Bereiche definiert sind:
100 Teile (a): 10-40 Teile (b);
100 Teile (a): 10-100 Teile (c); und
100 Teile (b): 80-400 Teile (c);

3. Verfahren zur Herstellung eines Latex, wie in Anspruch 1 oder 2 beansprucht, in dem eine wäßrige Dispersion, enthaltend Vinylacetat, den Vinylester einer tertiären aliphatischen Carbonsäure mit einem 9 Kohlenstoffatome enthaltenden Säureteil, ein oder mehrere copolymerisierbare Stabilisatoren, ein oder mehrere Pufferungsmittel und einen oder mehrere Polymerisationsinitiatoren, bei erhöhter Temperatur mit Ethylen umgesetzt wird.

4. Verfahren nach Anspruch 3, in dem die Reaktionstemperatur im Bereich von 40 bis 100°C liegt und die Umsetzung bei einem Ethylendruck im Bereich von 10 bis 70 bar durchgeführt wird.

5. Verfahren nach Anspruch 3 oder 4, in dem die Reaktionsmischung ein oberflächenaktives Mittel in Form eines Alkylarylsulfonats und eine Verbindung der allgemeinen Formel R-C₆H₄-O-(CH₂-CH₂O)ₙ-H enthält, in der R eine C₆₋₁₆-Alkylgruppe bedeutet und n eine Zahl von 3 bis 40 ist.

6. Verfahren nach irgendeinem der Ansprüche 3, 4 oder 5, in dem die Reaktionsmischung 0,1 bis 1,5 Gew.-% Acrylsäure oder Acrylamid als copolymerisierbaren Stabilisator enthält.

7. Verfahren nach irgendeinem der Ansprüche 3 bis 6, in dem die Reaktionstemperatur im Bereich von 40 bis 70°C liegt und die Polymerisation initiiert wird durch eine Redoxzersetzung eines Peroxids, Hydroperoxids, Persulfats oder Peroxidiphosphats mittels eines Salzes einer reduzierenden Säure von Schwefel, wobei die Umsetzung unter Ausschluß von Luft durchgeführt wird.

8. Anstrichfarbzusammensetzung oder Lack- oder Firniszusammensetzung, enthaltend einen Latex, wie in Anspruch 1 oder 2 beansprucht, zusammen mit mindestens einem zusätzlichen Bestandteil, der ausgewählt ist aus Co-Lösungsmitteln, Pigmenten, Verdickungsmitteln, Dispergiermitteln, Konservierungsmitteln, Korrosionsinhibitoren und Antischaummitteln.

9. Pulverförmiges Produkt, das durch Trocknen eines Latex, wie in Anspruch 1 oder 2 beansprucht, gebildet worden ist.

## Patentansprüche (Patentansprüche für folgende(n) Vertragsstaat(en): ES)

1. Verfahren zur Herstellung eines Latex, der zu 25 bis 65 Gew.-% des Latex aus einem Interpolymer besteht, das erhältlich ist durch Polymerisation von
(I) 97 bis 99,9 Gew.-% an (a) Vinylacetat, (b) Ethylen und (c) dem Vinylester einer tertiären, aliphatischen Carbonsäure, worin der Säureteil 9 Kohlenstoffatome enthält, und worin die Glasübergangstemperatur des Eigenpolymerisats der Komponente (c), bestimmt mittels Differentialthermoanalyse, im Bereich von 20-120°C liegt, wobei die Gewichtsverhältnisse der Bestandteile des Interpolymers durch die folgenden Bereiche definiert sind:
100 Teile (a) : 5-50 Teile (b);
100 Teile (a) : 5-120 Teile (c); und
100 Teile (b) : 50-500 Teile (c), mit
(II) 0,1 bis 3 Gew.-% weiterer copolymerisierbarer Stabilisatoren,
worin eine wäßrige Dispersion, enthaltend Vinylacetat, den Vinylester einer tertiären, aliphatischen Carbonsäure, worin der Säureteil 9 Kohlenstoffatome enthält, ein oder mehrere copolymerisierbare Stabilisatoren, ein oder mehrere Pufferungsmittel und einen oder mehrere Polymerisationsinitiatoren, bei erhöhter Temperatur mit Ethylen umgesetzt wird.

2. Verfahren nach Anspruch 1, in dem die Reaktionstemperatur im Bereich von 40-100°C liegt und die Umsetzung bei einem Ethylendruck im Bereich von 10 bis 70 bar durchgeführt wird.

3. Verfahren nach Anspruch 1 oder 2, in dem die Reaktionsmischung ein oberflächenaktives Mittel in Form eines Alkylarylsulfonats und eine Verbindung der allgemeinen Formel R-C₆H₄-O-(CH₂-CH₂O)ₙ-H enthält, in der R eine C₆₋₁₆-Alkylgruppe bedeutet und n eine Zahl von 3 bis 40 ist.

4. Verfahren nach einem der Ansprüche 1, 2 oder 3, in dem die Reaktionsmischung 0,1 bis 1,5 Gew.-% Acrylsäure oder Acrylamid als copolymerisierbaren Stabilisator enthält.

5. Verfahren nach einem der Ansprüche 1 bis 4, in dem die Reaktionstemperatur 40 bis 70°C beträgt und die Polymerisation durch eine Redoxzersetzung eines Peroxids, Hydroperoxids, Persulfats oder Peroxidiphosphats durch ein Salz einer reduzierenden Säure von Schwefel initiiert wird, wobei die Umsetzung unter Ausschluß von Luft durchgeführt wird.

## Revendications (Revendications pour l'(les) Etat(s) contractant(s) suivant(s): DE, FR, GB, IT, NL)

1. Un latex comportant de 25 à 65% en poids du latex d'un interpolymère que l'on peut obtenir par polymérisation de (I) de 97 à 99,9% en poids de (a) acétate de vinyle, (b) éthylène et (c) l'ester vinylique d'un acide aliphatique carboxylique tertiaire dans lequel la partie acide renferme 9 atomes de carbone, la température de transition vitreuse de l'auto-polymère du composant (c), telle que mesurée par calorimétrie par analyse différentielle, se situant dans la gamme de 20 à 120°C, dans lequel les rapports pondéraux des constituants de l'interpolymère sont définis par les gammes :
100 parties (a) : 5 - 50 parties (b) ;
100 parties (a) : 5 - 120 parties (c) ;
et 100 parties (b) : 50 - 500 parties (c), avec
(II) de 0,1 à 3% en poids d'autres stabilisants copolymérisables.

2. Un latex selon la revendication 1, dans lequel les rapports pondéraux des constituants de l'interpolymère sont définis par les gammes :
100 parties (a) : 10 - 40 parties (b) ;
100 parties (a) : 10 - 100 parties (c) ;
et 100 parties (b) : 80 - 400 parties (c).

3. Un procédé pour la préparation d'un latex tel que revendiqué dans la revendication 1 ou 2, dans lequel une dispersion aqueuse comportant de l'acétate de vinyle, de l'ester vinylique d'un acide aliphatique carboxylique tertiaire dans lequel la partie acide renferme 9 atomes de carbone, un ou plus d'un agents stabilisants, un ou plus d'un agent tampon, et un ou plus d'un initiateur de polymérisation, est mis à réagir avec de l'éthylène à température élevée.

4. Un procédé selon la revendication 3, dans lequel la température de réaction se situe dans la gamme de 40 à 100°C et la réaction est mise en oeuvre sous une pression d'éthylène dans la gamme de 10 à 70 bars.

5. Un procédé selon la revendication 3 ou 4, dans lequel le mélange réactionnel comporte un agent tensioactif à base de sulfonate d'alkylaryle et un composé de la formule générale R-C₆H₄-O-(CH₂-CH₂-O)ₙ-H, dans laquelle R représente un groupe alkyle en C₆ à C₁₆ et n représente un nombre de 3 à 40.

6. Un procédé selon l'une quelconque des revendications 3, 4 ou 5, dans lequel le mélange réactionnel comporte de 0,1 à 1,5% en poids d'acide acrylique ou d'acrylamide comme stabilisant copolymérisable.

7. Un procédé selon l'une quelconque des revendications 3 à 6, dans lequel la température de réaction est de 40 à 70°C et la polymérisation est initiée par décomposition redox d'un peroxyde, d'un hydroperoxyde, d'un persulfate ou d'un peroxydiphosphate par un sel d'un acide réducteur du soufre, la réaction étant mise en oeuvre sans présence d'air.

8. Une composition de peinture ou de laque de vernis, comportant un latex tel que revendiqué dans une des revendications 1 ou 2, conjointement avec au moins un constituant additionnel choisi parmi les co-solvants, les pigments, les agents épaississants, les agents dispersants, les agents conservateurs, les inhibiteurs de corrosion et les agents anti-mousse.

9. Un produit pulvérisant formé en séchant un latex tel que revendiqué dans la revendication 1 ou 2.

## Revendications (Revendications pour l'(les) Etat(s) contractant(s) suivant(s): ES)

1. Procédé pour la préparation d'un latex comportant de 25-65% en poids du latex d'un interpolymère que l'on peut obtenir par polymérisation de
(I) de 97 à 99,9% en poids de (a) acétate de vinyle, (b) éthylène et (c) l'ester vinylique d'un acide aliphatique carboxylique tertiaire dans lequel la partie acide renferme 9 atomes de carbone, la température de transition vitreuse de l'auto-polymère du composant (c), telle que mesurée par calorimétrie par analyse différentielle, se situant dans la gamme de 20 à 120°C, dans lequel les rapports pondéraux des constituants de l'interpolymère sont définis par les gammes :
100 parties (a) : 5 - 50 parties (b);
100 parties (a) : 5 - 120 parties (c); et
100 parties (b) : 50 - 500 parties (c), avec
(Il) de 0,1 à 3% en poids d'autres stabilisants copolymérisables, dans lequel une dispersion aqueuse comportant de l'acétate de vinyle, de l'ester vinylique d'un acide aliphatique carboxylique tertiaire dans lequel la partie acide renferme 9 atomes de carbone, un ou plus d'un agent stabilisant, un ou plus d'un agent tampon et un ou plus d'un initiateur de polymérisation, est mise à réagir avec l'éthylène à température élevée.

2. Un procédé selon la revendication 1, dans lequel la température de réaction se situe dans la gamme de 40 à 100°C et la réaction est mise en oeuvre sous une pression d'éthylène dans la gamme de 10 à 70 bars.

3. Un procédé selon la revendication 1 ou 2, dans lequel le mélange réactionnel comporte un agent tensioactif à base de sulfonate d'alkylaryle et un composé de la formule générale R-C₆H₄-O-(CH₂-CH₂-O)ₙ-H, dans laquelle R représente un groupe alkyle en C₆ à C₁₆ et n représente un nombre de 3 à 40.

4. Un procédé selon l'une quelconque des revendications 1, 2 ou 3, dans lequel le mélange réactionnel comporte de 0,1 à 1,5% en poids d'acide acrylique ou d'acrylamide comme stabilisant copolymérisable.

5. Un procédé selon l'une quelconque des revendications 1 4, dans lequel la température de réaction est de 40 à 70°C et la polymérisation est initiée par décomposition redox d'un peroxyde, d'un hydroperoxyde, d'un persulfate ou d'un peroxydiphosphate par un sel d'un acide réducteur du soufre, la réaction étant mise en oeuvre sans présence d'air.
